(19)

**Europäisches Patentamt**
**European Patent Office**
**Office européen des brevets**

(11) **EP 2 871 869 B1**

(12) **EUROPEAN PATENT SPECIFICATION**

(45) Date of publication and mention
of the grant of the patent:
**30.03.2016 Bulletin 2016/13**

(51) Int Cl.:
*H04W 4/02* *(2009.01)*    *G06Q 30/02* *(2012.01)*
*H04L 12/26* *(2006.01)*

(21) Application number: **14192352.4**

(22) Date of filing: **07.11.2014**

(54) **An accurate mechanism for estimating a mobile communication service provider's market share**

Präziser Mechanismus zur Schätzung des Marktanteils eines Dienstanbieters von mobiler Kommunikation

Mécanisme précis pour estimer les parts de marché d'un fournisseur de service de communication mobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2013 IL 22939313**

(43) Date of publication of application:
**13.05.2015 Bulletin 2015/20**

(73) Proprietor: **Deutsche Telekom AG**
**53113 Bonn (DE)**

(72) Inventors:
• **CHIZI, Barak**
  **Ashkelon (IL)**

• **ELOVICI, Yuval**
  **Ashkelon (IL)**
• **MIMRAN, David**
  **Tel Aviv (IL)**
• **ROKACH, Lior**
  **Omer (IL)**

(74) Representative: **Weickmann & Weickmann**
**Postfach 860 820**
**81635 München (DE)**

(56) References cited:
**WO-A1-2013/128081    US-A1- 2011 295 577**

**Description**

**Field of the invention**

The invention is from the field of mobile communication. Specifically the invention relates to a method of determining the market share of a mobile communication service provider.

**Background of the Invention**

For any mobile communication service provider, knowing his exact market share gives him a competitive advantage over other providers. This knowledge enables the provider to plan his marketing strategy in order to gain more customers in specific geographical locations. At the present time market share data is usually static data supplied on the level of an entire city and is mostly based on sampling or through an expert's estimation.

WO 2013/1228081 teaches a method of estimating the number of people in an area. The method comprises detecting the number of active communication devices in a first area and detecting an estimate of the number of people that are actually present in that area by means such as physically counting the people that enter or exit the area or by using image processing techniques to count the people visible in images captured by imaging devices located in the area. A mapping parameter, parameters, or function is then derived between the number of active communication devices and the number of persons in the first area. This mapping function is then applied to the number of active communication devices detected in a second area in order to determine the number of persons present in that area. The second area can be the same as the first area at a different time or can be at a different location.

US2011/0295577 teaches a system and method of estimating the number of people in an area. The method comprises detecting the number of active communication devices in the area and inputting data retrieved from the communication devices and supplied by the wireless service operators into a statistical model. The statistical model is calibrated by sampling and analysis at locations where a near-exact crowd estimate is possible or based on industry data and market research. This application does not teach a method of determining the market share of a specific wireless service operator in the area.

It would be much more helpful to have the data relating to market share provided at the level of neighborhoods, streets, or individual buildings in a dynamic matter.

It is a purpose of the present invention to provide a method, which provides such data.

Further purposes and advantages of this invention will appear as the description proceeds.

Summary of the Invention

The invention is a method of enabling a specific mobile communication service provider ($Dt$) to estimate his market share on a street level in real time during a specific period of time over a particular point of interest (POI). The method comprises:

> a. determining the total number of handsets that are generating any registration event in the network that involves information regarding the location of the device (active handsets) served by Dt in said POI during said period of time ($ADDt$);
> b. determining the ratio (AMD) of the number of active handsets served by $Dt$ to the total number of handsets served by $Dt$ in said POI during said period of time ;
> c. determining the ratio (SMB) of the number of non-active handsets served by $Dt$ to the total number of handsets served by $Dt$ in said POI during said period of time;
> d. obtaining from the manufactures the total number of handsets of model $i$ that have been sold to customers of all providers of mobile communication services in said POI;
> e. determining the number of handsets of model i that are serviced by $Dt$ in said POI;
> f. determining the ratio ($HSTiDt$) of handsets of model $i$ that have been sold to customers of Dt to the number of handsets of model $i$ that have been sold to customers of all providers of mobile communication services in said POI;
> g. determining the number ($PHSTiDt$) of handsets of model $i$ serviced by $Dt$ that are generating active signals at the POI during said specific period of time;
> h. determining the total number ($ADi$) of active devices of model i serviced by all service providers in said in said POI during said period of time designated,wherein ADi, = $PHSTiDt/HSTiDt$;
> i. determine the total number ($ADn$) of active devices for all n models of handsets for which sales information is available, wherein $ADn$ =

$$\sum_{1=1}^{n}\left(\frac{PHSTiDt}{HSTiDt}\right);$$

j. determining the market share ($MSDt$) of $Dt$, wherein MSDt = $ADDt$/$ADn$.

If in step i only k<n models are active then steps i and j are replaced by the steps:

k. determine the total number ($ADk$) of active devices for all n models of handsets for which sales information is available, wherein $ADk$ =

$$\sqrt[K]{\prod_{i=1}^{K}\left(\frac{PHSTi}{(HSTiDt*IHSTi)*SMB}\right)};$$

and

l. determining the market share ($MSDt$) of $Dt$, wherein MSDt = $ADDt$/$ADk$.

All the above and other characteristics and advantages of the invention will be further understood through the following illustrative and non-limitative description of embodiments thereof.

Detailed Description of Embodiments of the Invention

The method of the invention relies on real time computation, i.e. it provides the market share for a specific mobile communication service provider at the rate at which data related to device usage is received from the mobile network.
The method of the invention enables the mobile communication service provider to estimate his market share on a street level in real time over a particular point of interest (POI). The POI can be any geographical region serviced by the provider and can range from whole countries down to groups of offices in a large office building. To deliver such output the method uses the network signaling data, which includes positioning data for active devices. Additionally, by using static data comprising the distribution of different models of devices employed by users in the network and the penetration rate of each model into the market, an accurate estimation of market share can be achieved.
The method of the invention comprises the following three phases:

1. estimating the number of silent users;
2. applying the model distribution; and
3. performing an integrating calculation over the POI.

Estimating the number of silent users

When collecting any cellular identity within a specific POI over time, the signaling data reveals only the active users. The term "active users" refer to the handsets that generate "active signals", i.e. any registration event in the network that involves information regarding the location of the device. The total number of active handsets served by a specific mobile communication service provider, herein designated Dt, that are active in the specific POI during a specific period of time is designated herein as $ADDt$.
The ratio of the active handsets to the total number of handsets served by the service provider in the specific POI during the specific period of time is known herein as AMB and is estimated by the following ratio:

$$AMB = \frac{\text{active handsets in the area served by the provider}}{\text{the total number of handsets served by the provider}} = \frac{ADDt}{\text{the total number of handsets served by the provider}}$$

Therefore the ratio of the non-active users, i.e. the ratio of handsets that are not generating an active signal at the POI to the total number of handsets served by the service provider in the specific POI during the specific period of time, known herein as SMB, can be estimated as:

$$SMB = 1 - AMB$$

AMB and SMB can be determined for any period of time for which it is desired to know the market share. Non-limiting examples could be between 8:00 and 9:00 on Monday morning, for the first week in July, and between 17:00 and 18:00 each day of the week. The method assumes that once AMB and SMB have been determined for a given time period they will be the same for corresponding time periods, e.g. the values of AMB and SMB determined for the time period between 12:00 and 13:30 on the first Tuesday of the month will be the same for the same hours in the following Tuesdays that occur during comparable periods of the year, i.e. different values of AMB and SMB will be determined for Tuesdays that fall during a holiday period as compared to a regular work day.

**Applying Model Distribution**

The first phase of the method generates the ratio of non-active users. However, because the active signals that are collected only belong to devices serviced by a specific service provider, SMB does not give the total number of devices that are available in a given POI.

The solution provided by the invention to this problem is based on obtaining from the manufactures the total number of handsets of a specific model that have been sold to customers of all providers of mobile communication services in the POI. If there are n models of handsets for which sales information is available, then for model i the percentage of the total number of handsets of model i sold to customers that are serviced by specific service provider $Dt$ to the total number of handsets of model i sold to customers that are serviced by all service providers is known herein as $HSTiDt$.

A mandatory requirement for implementing this phase of the method is that sales information regarding at least one model ($i$=1=$n$) is available. A basic assumption is that for a specific service provider the percentage of handsets of each type out of the total for that type, i.e. $HSTiDt$, is constant throughout the service providers range of operation.

**Integrating Calculation over POI**

A first input for calculating the market share of a specific mobile communication services provider over a specific POI at a specific period of time is the number of handsets of model $i$ serviced by provider Dt that are generating active signals at that POI and time. This will be known herein as $PHSTiDt$. A second input is the percentage of the provider's handsets of model i out of the total number of handsets of model $i$ in the POI, i.e. $HSTiDt$.

Then in the POI the total number of active devices of model i serviced by all service providers, designated ADi, is equal to $PHSTiDt/HSTiDt$ and the total number of active devices for all n models, designated $ADn$, is:

$$ADn = \sum_{1=1}^{n} \left( \frac{PHSTiDt}{HSTiDt} \right)$$

Thus, if the required sales information is available for all n models of handsets, the market share of provider Dt at the specific POI for the specific time period, known herein as $MSDt$, would be the number of active devices receiving services provided by Dt, known herein as $ADDt$, divided by the total number of active devices serviced by all providers, i.e.

$$MSDt = \frac{ADDt}{\sum_{i=1}^{n} \left( \frac{PHSTiDt}{HSTiDt} \right)} = \frac{ADDt}{ADn}.$$

However, since usually not all n models are active at any given time, an additional property which describes the distribution of handsets within the customers of all of the providers is used. This will be notated as $IHSTi$, wherein,

$$IHSTi = \frac{number\ of\ handsets\ of\ model\ i\ serviced\ by\ all\ providers}{total\ number\ of\ all\ handsets\ of\ all\ models\ serviced\ by\ all\ providers}$$

Therefore the total number of handsets of k different models, wherein k<n serviced by all service providers over a specific POI, designated *ADk,* will be:

$$ADk = \sqrt[K]{\prod_{i=1}^{K}\left(\frac{PHSTi}{(HSTiDt*IHSTi)*SMB}\right)}$$

wherein, each component in the above harmonic average is divided by SMB in order to estimate the number of users (active and non-active) serviced by all service providers using a specific model in a specific POI.

Therefore the market share of mobile communication service provider Dt in the POI is given by:

$$MSDt = \frac{ADDt}{\sqrt[K]{\prod_{i=1}^{K}\left(\frac{PHSTi}{(HSTiDt*IHSTi)*SMB}\right)}} = \frac{ADDt}{ADk}.$$

Although embodiments of the invention have been described by way of illustration, it will be understood that the invention may be carried out with many variations, modifications, and adaptations, without exceeding the scope of the claims.

**Claims**

1.  A method of enabling a specific mobile communication service provider Dt to estimate his market share on a street level in real time during a specific period of time over a particular point of interest POI, said method comprising:

    a. determining the total number of handsets that are generating any registration event in the network that involves information regarding the location of the active handsets served by Dt in said POI during said period of time *ADDt*;
    b. determining the ratio AMD of the number of active handsets served by *Dt* to the total number of handsets served by *Dt* in said POI during said period of time ;
    c. determining the ratio SMB of the number of non-active handsets served by *Dt* to the total number of handsets served by *Dt* in said POI during said period of time;
    d. obtaining from the manufactures the total number of handsets of model *i* that have been sold to customers of all providers of mobile communication services in said POI;
    e. determining the number of handsets of model i that are serviced by *Dt* in said POI;
    f. determining the ratio *HSTiDt* of handsets of model *i* that have been sold to customers of Dt to the number of handsets of model i that have been sold to customers of all providers of mobile communication services in said POI;
    g. determining the number *PHSTiDt* of handsets of model *i* serviced by *D*t that are generating active signals at the POI during said specific period of time;
    h. determining the total number *ADi* of active devices of model i serviced by all service providers in said in said POI during said period of time designated, wherein ADi, = *PHSTiDt/HSTiDt*;
    i. determine the total number *ADn* of active devices for all n models of handsets for which sales information is available, wherein

$$ADn = \sum_{1=1}^{n}\left(\frac{PHSTiDt}{HSTiDt}\right);$$

    j. determining the market share *MSDt* of *Dt,* wherein MSDt = *ADDt/ADn.*

2.  The method of claim 1, wherein in step i only k<n models are active and steps i and j are replaced by the steps:

    k. determine the total number *ADk* of active devices for all n models of handsets for which sales information is available, wherein

$$ADk = \sqrt[K]{\prod_{i=1}^{K}\left(\frac{PHSTi}{(HSTiDt*IHSTi)*SMB}\right)};$$

and

l. determining the market share *MSDt* of *Dt,* wherein MSDt = *ADDt/ADk.*

## Patentansprüche

1. Verfahren, um es einem spezifischen mobilen Kommunikationsdienstprovider Dt zu ermöglichen, seinen Marktanteil auf der Ebene von Straßen in Echtzeit während einer spezifischen Zeitperiode um einen spezifischen Ort des Interesses POI herum abzuschätzen, wobei das Verfahren umfasst:

   a. Bestimmen der gesamten Anzahl an Mobilteilen, die irgendein Registrierungsereignis in dem Netzwerk erzeugen, das Informationen bezüglich des Orts der aktiven Mobilteile einbezieht, die durch Dt in dem POI während der Zeitperiode ADDt bedient werden;
   b. Bestimmen des Verhältnisses AMD der Anzahl an aktiven Mobilteilen, die durch Dt bedient werden, zu der gesamten Anzahl an Mobilteilen, die durch Dt in dem POI während der Zeitperiode bedient werden;
   c. Bestimmen des Verhältnisses SMB der Anzahl der nicht aktiven Mobilteile, die durch Dt bedient werden, zu der gesamten Anzahl an Mobilteilen, die durch Dt in dem POI während der Zeitperiode bedient werden;
   d. Erhalten der gesamten Anzahl an Mobilteilen eines Modells i von den Herstellern, die an Kunden aller Provider von mobilen Kommunikationsdiensten in dem POI verkauft wurden;
   e. Bestimmen der Anzahl an Mobilteilen des Modells i, die durch Dt in dem POI bedient werden;
   f. Bestimmen des Verhältnisses HSTiDt der Mobilteile des Modells i, die an Kunden von Dt verkauft wurden, zu der Anzahl an Mobilteilen des Modells i, die an Kunden aller Provider von mobilen Kommunikationsdiensten in dem POI verkauft wurden;
   g. Bestimmen der Anzahl PHSTiDt an Mobilteilen des Modells i, die durch Dt bedient werden und die aktive Signale an dem POI während der spezifischen Zeitperiode generieren;
   h. Bestimmen der gesamten Anzahl ADi an aktiven Vorrichtungen des Modells I, die durch alle Dienstprovider in dem POI während der bestimmten Zeitperiode bedient werden, wobei ADi, = PHSTiDt/HSTiDt;
   i. Bestimmen der gesamten Anzahl ADn an aktiven Vorrichtungen für alle n Modelle an Mobilteilen, für die Verkaufsinformationen verfügbar sind, wobei

$$ADn \ = \sum_{1=1}^{n} \left( \frac{PHSTiDt}{HSTiDt} \right);$$

   j. Bestimmen des Marktanteils MSDt von Dt, wobei MSDt = ADDt/ADn ist.

2. Verfahren nach Anspruch 1, wobei in Schritt i nur k<n Modelle aktiv sind und Schritt i und j durch die Schritte ersetzt sind:

   k. Bestimmen der gesamten Anzahl ADk an aktiven Vorrichtungen für alle n Modelle an Mobilteilen, für die Verkaufsinformationen verfügbar sind, wobei

$$ADk = \sqrt[K]{\prod_{i=1}^{K} \left( \frac{PHSTi}{(HSTiDt*IHSTi)*SMB} \right)};$$

   und
   l. Bestimmen des Marktanteils MSDt von Dt, wobei MSDt = ADDt/ADk ist.

## Revendications

1. Procédé pour permettre à un fournisseur spécifique de service de communication mobile Dt d'estimer sa part de marché au détail en temps réel durant une période spécifique sur un point d'intérêt particulier POI, ledit procédé comprenant :

   a. la détermination du nombre total de combinés qui génèrent un quelconque événement d'enregistrement dans le réseau qui implique des informations concernant la localisation des combinés actifs servis par Dt dans ledit POI durant ladite période ADDt ;

b. la détermination du rapport AMD du nombre de combinés actifs servis par Dt par rapport au nombre total de combinés servis par Dt dans ledit POI durant ladite période ;

c. la détermination du rapport SMB du nombre de combinés non actifs servis par Dt par rapport au nombre total de combinés servis par Dt dans ledit POI durant ladite période ;

d. l'obtention, à partir des fabrications, du nombre total de combinés de modèle i qui ont été vendus à des clients de tous les fournisseurs de services de communication mobile dans ledit POI ;

e. la détermination du nombre de combinés de modèle i qui sont servis par Dt dans ledit POI ;

f. la détermination du rapport HSTiDt de combinés de modèle i qui ont été vendus à des clients de Dt par rapport au nombre de combinés de modèle i qui ont été vendus à des clients de tous les fournisseurs de services de communication mobile dans ledit POI ;

g. la détermination du nombre PHSTiDt de combinés de modèle i servis par Dt qui génèrent des signaux actifs au POI durant ladite période spécifique ;

h. la détermination du nombre total ADi de dispositifs actifs de modèle i servis par tous les fournisseurs de service dans ledit POI durant ladite période désignée, dans lequel ADi = PHSTiDt/HSTiDt ;

i. la détermination du nombre total ADn de dispositifs actifs pour tous les n modèles de combinés pour lesquels des informations de vente sont disponibles, dans lequel

$$ADn = \sum_{1=1}^{n} \left( \frac{PHSTiDt}{HSTiDt} \right)_{;}$$

j. la détermination de la part de marché MSDt de Dt, dans lequel MSDt = ADDt/ADn.

2. Procédé selon la revendication 1, dans lequel, dans l'étape i, seulement k < n modèles sont actifs et les étapes i et j sont remplacées par les étapes :

k. la détermination du nombre total ADk de dispositifs actifs pour tous les n modèles de combinés pour lesquels des informations de vente sont disponibles,
dans lequel

$$ADk = \sqrt[K]{\prod_{i=1}^{K} \left( \frac{PHSTi}{(HSTiDt+IHSTi) \ast SMB} \right)}_{;}$$

et

l. la détermination de la part de marché MSDt de Dt, dans lequel MSDt = ADDt/ADk.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20131228081 A
- US 20110295577 A